# EUROPEAN PATENT SPECIFICATION

(11) **EP 2 816 298 B1**
(45) Date of publication and mention of the grant of the patent: **31.07.2019**
(21) Application number: 14002130.4
(22) Date of filing: 20.06.2014
(51) Int. Cl.: F24S 25/61, F24S 25/60

(54) **Attachment member for attaching objects to an underlying construction element**
Befestigungselement zum Befestigen von Objekten auf einem darunterliegenden Bauelement
Élément de fixation pour fixer des objets à un élément de construction sous-jacent

(30) Priority: 20.06.2013 DK 201300381
(43) Date of publication of application: 24.12.2014
(73) Proprietor: RAUNSTRUP TØMRER A/S, 8200 Aarhus N (DK)
(72) Inventor: Bolther, Verner, 8920 Randers NV (DK)
(74) Representative: Rottenberg, Annabell Simone

(56) References cited:
- EP-A1- 2 267 793
- EP-A2- 2 828 070
- WO-A1-2012/061796
- GB-A- 2 487 568
- US-A1- 2008 087 275
- US-A1- 2010 281 793
- US-A1- 2011 120 047

## Description

### Field of invention

The present invention generally relates to an attachment member for attaching one or more objects to an underlying construction element. The present invention more particularly relates to an attachment member configured to secure solar panels e.g. solar photovoltaic panels or solar mounts to one or more underlying construction elements such as a rafter or a concrete deck.

### Prior art

Mounting of items such as solar panels to a roof covered with roofing felt requires special mounts or brackets configured to receive the mounting rail onto which the solar panels have to be secured. During the mounting process it is of great importance that the areas in which the roofing felt is penetrated is sealed in order to prevent water ingress.

Different types of mounts and brackets have been suggested for the purpose of being secured to an underlying roof by mechanical means such as screws. These mounts and brackets are, however, expensive and are not suitable for being used in all applications.

Therefore, a low-cost alternative to existing types of mounting brackets is desirable.

During installation of solar panels to an isolated roof, there is a particular need for attaching the mounting rails to construction elements provided below an insulating material located under the roofing felt. Such construction elements may be a rafter or a concrete layer or concrete deck. The available mounting brackets are attached to an underlying structure either by means of a plurality of screws or by means of a lower attachment element that is required to engage with a nut.

WO 2012061796 A1 discloses a photovoltaic panel racking assembly comprising a cylindrically shaped standoff fixed to a toggle through a threaded rod. The racking assembly is configured to be attached to an underlying structure by means of the toggle and a nut sized and shaped to operatively engage with the toggle to fix the relative position of the toggle and the nut.

EP 2267793 A2 discloses an attachment assembly for a panel. The attachment assembly comprises a plurality of single parts that needs to be assembled to form the attachment assembly. The attachment assembly comprises a threaded attachment member that has to be fixed to a corresponding nut.

GB 2487568 A discloses a roof tile with attachment for fixing additional accessories to the roof. The roof tile comprises a tile body and an attachment flange extending parallel to the tile surface and being provided with two slots for attachment. The attachment flange is adjustably mountable to the tile and allows solar panels and satellite receivers to be fitted to a rooftop.

US 2008087275 A1 discloses a solar installation system comprising a support frame for a solar panel. The support frame is secured to the roof structure by a clamping assembly.

From EP 2828070 A0, a plastic component having at least one fastening element attached thereto is known. The fastening element comprises at least one attachment section for attachment to the plastic component and at least one fastening section for fastening a part to be mounted on the plastic component. The plastic components are fibre-reinforced. A threaded bolt is used for fastening the plastic component. However, the threaded bolt may not be sufficient for firmly attaching the plastic component if a heavy structure is attached.

From US 2011120047 A1, a roof mount assembly is known. The roof mount includes a piece of flashing positioned on the substrate to which the roof mount assembly is mounted. A fastener extends through a flashing aperture, and a bracket is connected to the flashing via the fastener, and the bracket is sized to support at least one roof-mounted structure on the roof. The roof mount assembly is fastened through a threaded bolt. However, the treaded bolt may not be fully sufficient to support a heavy structure such as a solar panel.

From US 20100281793 A1, systems and nuts are known. The systems and nuts are useful in securing a rail to a module or a rail to a support.

In particular, the nut for securing solar cell arrays comprises an aperture for receiving a bolt, a first flange for engaging a first recess of a first side of the rail, and a second flange for engaging a second recess on a second side of the rail opposing the first side of the rail, where the nut can be inserted or removed from the rail at an angle. A base to be secured to the roof may also be applied. However, the nut and bolt are typically threaded. As solar cell arrays are heavy structures, and, thus, the system comprising said nut and bolt may not be sufficient to support the solar cell array adequately.

It would be desirable to have improved brackets or mounts suitable for being used to install solar panels and other objects on an insulated roof.

It is an object of the present inventionto provide an attachment member that is cheaper to produce than the existing types of brackets and mounts for installation of solar panels and mounting rails. It is also an object of the present invention to provide an attachment member suitable for being secured to an isolated roof.

### Summary of the invention

The object of the present invention can be achieved by an attachment member as defined in claim 1. Preferred embodiments are defined in the dependent sub claims and explained in the following description and illustrated in the accompanying drawings.

The attachment member according to the invention is an attachment member for attaching mounting rails for solar panels to an underlying construction element such as a rafter or a concrete deck, where the attachment member comprises a massive or semi-massive connection member having a longitudinal axis, and an upper end and a lower end, and a mount or a bracket attached to the upper portion of the connecting member and configured for mounting mounting rails for attachment of solar panels, the unit being attached to the upper portion of the connecting member, and where the attachment member further comprises at least one lower attachment element configured to be mounted in the underlying construction element and attached to the connection member, where the connection member is configured to transfer load from the mount, the bracket or the unit to the at least one lower attachment element, where the connection member comprises a lower connection surface extending basically perpendicular to the longitudinal axis of the connection member, where the lower connection surface is configured to bear against the underlying construction element and hereby provide a stabilising lower connection surface when the attachment member is mounted to the underlying construction element, where the at least one lower attachment element protrudes from the lower connection surface and extends along the longitudinal axis of the connection member, wherein the connection member comprises a plurality of spikes protruding from the lower contact surface.

Hereby, it is possible to provide an attachment member that is cheaper to produce than the existing types of brackets and mounts for installation of solar panels and mounting rails. Moreover, it is possible to provide an attachment member suitable for being secured to an isolated roof. Furthermore, it is possible to provide an attachment member capable of being screwed directly into an underlying construction element such as a concrete deck or a rafter in order to allow for a fast and easy mounting of the attachment member.

The attachment member may be used to mount mounting rails for attachment of solar panels to an underlying roof, including rafters, plywood, boards or concrete.

The attachment member may be used to mount ventilation devices, rood arrangements in general including guiding rails and the like.

It may be an advantage that the connection member is massive since it may reduce the production costs and make it easier to manufacture the attachment member. The attachment member may be moulded in plastic by means of e.g. injection moulding or extrusion or cutting.

The lower attachment element may be made in metal e.g. stainless steel. It may be beneficial that the lower attachment element is shaped as a screw or another element suitable for being attached to wood or stoe or concrete. The lower attachment element may be any suitable type of screw including a lag screw, a twinfast screw, an anchor bolt, a self-drilling screw or any other suitable type of attachment element.

It is possible to apply one or more attachment elements.

Attachment of the attachment element to the connection member may be carried out by any suitable means e.g. moulding, gluing or mechanical attachment e.g. by screwing.

The connection member is massive or almost massive.

It is an advantage to have a connection member configured to transfer load from the mount, the bracket or the unit for attachment of the mount or bracket to the at least one lower attachment element, where the connection member comprises a lower connection surface extending basically perpendicular to the longitudinal axis of the connection member, where the lower connection surface is configured to bear against the underlying construction element and hereby provide a stabilising lower connection surface when the attachment member is mounted to the underlying construction element. Hereby, it is possible to provide a reliable and torsionally rigid anchoring.

When the at least one lower attachment element protrudes from the lower connection surface and extends along the longitudinal axis of the connection member it is possible to ensure a firm attachment of the attachment member.

It is an advantage that the connection member is a massive member made in plastic, where at least one lower attachment element is shaped as a tapered rod member, preferably a threaded metal rod.

Such attachment member provides a fast and easy mounting of the attachment member.

It may be an advantage that the connection member comprises an upper planar connection surface extending basically perpendicular to the longitudinal axis of the connection member.

It may be beneficial that the connection member comprises an upper planar contact surface angled between 45 and 90 degrees relative to the longitudinal axis of the connection member. Hereby, it is possible to angle the objects relative to horizontal.

It may be beneficial that the connection member comprises an upper planar contact surface angled between 60 and 80 degrees relative to the longitudinal axis of the connection member so that solar panels may be mounted 10-30 degrees relative to an underlying roof (e.g. a horizontal roof).

It may be advantageous that the connection member comprises a cylindrical portion and comprises a planar circular upper contact surface and a planar lower contact surface. Such construction is cheap, easy to produce and strong.

It may be an advantage that the connection member comprises a rectangular, preferably square cross section and comprises a planar and rectangular, preferably square upper contact surface and a planar rectangular, preferably square lower contact surface extending basically parallel to the upper contact surface, where a plurality of bores are provided in the connection member, through which bores the attachment member is configured to be attached to the underlying construction element. Such connection member is easy to seal when mounting it on roofing felt.

It may be an advantage that the connection member comprises a rectangular, preferably square cross section and comprises a planar and rectangular, preferably square upper contact surface and a planar rectangular, preferably square lower contact surface extending basically parallel to the upper contact surface, where a plurality of through-going bores are provided in the connection member, through which through-going bores the attachment member is configured to be attached to the underlying construction element.

It may be beneficial that a centrally arranged mount or bracket is attached to connection member, where the mount or bracket is attached to a threaded rod, which threaded rod is moulded or mechanically attached to the connection member. Such construction is simple and strong.

It may be an advantage that a first bore is provided in the upper portion of the connection member and a lower bore is provided in the connection member, where the two bores extend basically parallel to the longitudinal axis of the connection member, where an upper attachment element is formed as a threaded rod is mounted in the first bore. Where the lower attachment element is formed as a threaded rod and is mounted in the second bore.

It may be advantageous that a through-going bore is provided in the connection member and that a through-going rod member extends through the through-going bore and is attached to the connection member. Such construction is easy to produce, strong and reliable.

It may be an advantage that the rod member is a threaded rod member. Hereby, it is possible to provide a firm attachment.

It may be beneficial that the attachment member is configured to upon rotation of the threaded rod member adjust the position of the mount or bracket relative to the connection member. Hereby, adjustment may be provided.

It may advantageous that the attachment member is configured to upon rotation of the threaded rod member adjust the distance from the connection member to the distal end of the lower attachment element being shaped as a threaded rod member.

It may be an advantage that a recess configured to receive and contain a flexible sealing member is provided at the periphery at the lower portion of the connection member. Hereby it is possible to provide an appropriate and desirable sealing.

It may beneficial that the attachment member is configured to be mounted directly into soil, sand or gravel.

According to the invention, the connection member comprises a plurality of spikes protruding from the lower contact surface. Hereby it is possibly to glue the attachment member to a roof in an easier manner. The spikes will prevent the attachment member from skidding.

It may be advantageous that the connection member is provided with a plurality of bores and a plurality of bung members configured to be at-tachably inserted into the bores, where the bung members comprises a spike protruding from the bung members. Hereby it is easy to attach the bung members in the bores and hereby provide the connection member with spikes.

It may be an advantage that the bung members are conical and the bores are cylindrical. The bung members may be cylindrical and the bores may be conical.

It is possible to provide a flexible glue or sealing under the lower contact surface and glue the attachment member to e.g. a roof. Spikes will prevent the attachment member from skidding.

It may be an advantage that the glue or sealing is flexible after it has set hard.

### Description of the Drawings

The invention will become more fully understood from the detailed description given herein below. The accompanying drawings are given by way of illustration only, and thus, they are not limitative of the present invention. In the accompanying drawings:
- Fig. 1: shows a schematic view of an attachment member, however without protruding spikes according to the invention, and an underlying construction element of an isolated roof;
- Fig. 2: shows a schematic view of an alternative attachment member, however without protruding spikes according to the invention, and an underlying construction element of an isolated roof;
- Fig. 3: shows a schematic view of two attachment members, however without protruding spikes according to the invention;
- Fig. 4: shows different views of two attachment members, however without protruding spikes according to the invention;
- Fig. 5: shows schematic views of an attachment member, however without protruding spikes according to the invention;
- Fig. 6: shows a schematic cross-sectional view of an attachment member, however without protruding spikes according to the invention;
- Fig. 7: shows a schematic cross-sectional view of another attachment member, however without protruding spikes according to the invention;
- Fig. 8: shows a schematic view of how to seal the attachment member according to the invention to an underlying construction;
- Fig. 9: shows a schematic view of how to install solar panels on a flat roof;
- Fig. 10: shows a schematic view of an attachment member, however without protruding spikes according to the invention, and how it is attached to an underlying construction element in an isolated roof, where the roofing felt is provided on the top of the insolation without a layer between the insolation and the roofing felt;
- Fig. 11: shows schematic views of two attachment members, however without protruding spikes according to the invention, and
- Fig. 12: schematic views of an attachment member according to the invention.

### Detailed description of the invention

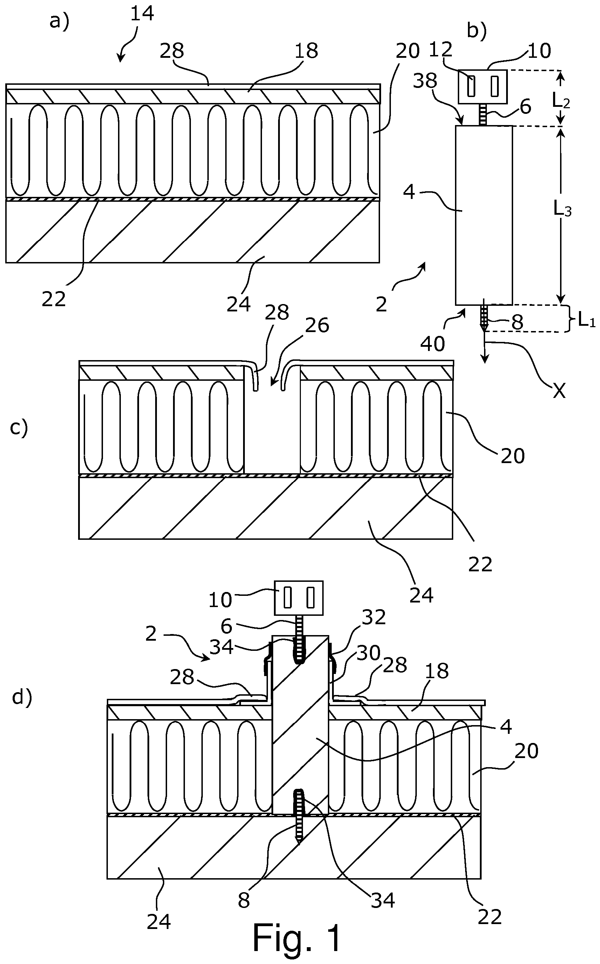

Referring now in detail to the drawings for the purpose of illustrating preferred embodiments of the present invention, a schematic view of an attachment member according to the invention and an underlying construction element of an isolated roof are illustrated in Fig. 1.

The roof 14 comprises an outer layer provided with roofing felt 28 attached to an underlying plywood plate 18 (or alternatively boards). An insolation layer 20 (e.g. mineral wool) is arranged below the plywood plate 18. The insolation layer 20 is provided above an underlying construction element 24. A vapour barrier 22 is arranged between the insolation 20 and the underlying construction element 24. The underlying construction element 24 may be a rafter, a concrete layer or concrete deck.

Fig. 1 b) illustrates a side view of an attachment member 2. The attachment member 2 comprises an at least partly massive cylindrical connection member 4 comprising an upper planar circular contact surface 38 and a lower planar circular contact surface 40.

A lower attachment element 8 protruding from the lower contact surface 40 is attached to the connection member 4. The lower attachment element 8 extends along the longitudinal axis X of the connection member 4.

The lower attachment element 8 is formed as a tapered metal rod that may be provided with an outer thread.

An upper attachment element 6 that extends along the longitudinal axis X of the connection member 4 and protrudes from the upper contact surface 38 is attached to the connection member 4. The upper attachment element 6 is shaped as a threaded metal rod having a distal end to which a mount 10 is attached. Apertures 12 for attachment of e.g. a mounting rail for installation of a solar panel are provided in the mount 10.

The length L₃ of the connection member 4 is significantly larger than the length L₁ of the lower attachment element 8 and the total length L₂ of the mount 10 and the portion of the threaded rod 6 that extend beyond and protrudes from the connection member 4.

It may be an advantage to produce the connection member 4 in a plastic material, preferably, recycled plastic, including polyethylene that may be fibre-reinforced or modified in another way.

Fig. 1 c) shows a cross-sectional view of a roof provided with a cylindrical bore 26 for mounting of the attachment member 2 shown in Fig. 1b).

It should be noted that roofing felt 28 extends into the bore 26. This loose roofing felt 28 is applied during the following sealing procedure of the mounted attachment member 2 (see Fig. 1 d)). The vapor barrier 22 is unbroken in Fig. 1 c) and it may be an advantage to attempt to maintain as much of the vapor barrier 22 as possible in order to ensure the optimum sealing of the bore 26.

In Fig. 1 d) showing a schematic cross-sectional view of the attachment member 2 mounted in the bore 26 illustrated in Fig. 1 c). The lower attachment element 8 is fixed in the underlying construction element 24. This attachment may be carried out by applying a pre-drilled bore (not shown) provided in the underlying construction element 24.

It can be seen from Fig. 1 d) that the attachment member provides a stable construction due to the fact that since the lower contact surface 40 rests on the underlying construction element 24. Moreover, it can be seen that the tapered metal rod 8 is attached to the connection member 4 by means of an adhesive 34. The adhesive 34 may advantageously be an anchoring material e.g. an anchoring material for chemical anchors installable in a drilled bore e.g. in a building material like stone or similar material such as concrete and brick.

The vapor barrier 22 is partially compressed by the attachment member 2 attached on the top of it. As previously mentioned, it may be advantageously to maintain the vapor barrier 22 as intact as possible.

A T-shaped collar 30 is provided on top of the plywood plate 18. The plywood plate 18 abuts against the plywood plate 18 and encloses the part of the connection member 4 that required to be sealed against ingress of water (coming from above).

The loose pieces of roofing felt 28 shown in Fig. 1c) are configured to be arranged on the top of the lower portion of the T-shaped collar 30. When the loose pieces of roofing felt 28 are arranged on the top of the lower portion of the T-shaped collar 30 the loose pieces of roofing felt 28 are sealingly attached to the lower portion of the T-shaped collar 30 by heating the overlapping roofing felt 28.

The upper portion of the connection member 4 is sealed against the T-shaped collar 30 by means of a flexible sealing material 32, e.g. a heat-shrinkable tubing (heat-shrink tubing). The flexible sealing material 32 is provided on the top portion of the connection member 4 in such a manner that it at the same time overlaps the upper portion of the T-shaped collar 30. A heat-shrinkable tubing may be made of nylon, polyolefin, a thermoplastic material such as polyolefin, fluoropolymer (e.g. FEP, PTFE or Kynar), PVC, neoprene, silicone elastomer or Viton which shrinks only radially when heated.

As an alternative to a heat-shrinkable tubing, the sealing may be provided by applying a T-shaped plastic collar 30. The T-shaped plastic collar 30 is during heating sealed against the connection member 4.

It is also possible to apply mechanical sealing means comprising a clamp and one or more rubber elements that upon the radially oriented forces from the clamp, seals the collar 30 against the connection member 4.

In Fig. 1 d) it can moreover be seen that the upper attachment element 6 is attached to the connection member 4 by means of an adhesive 34.

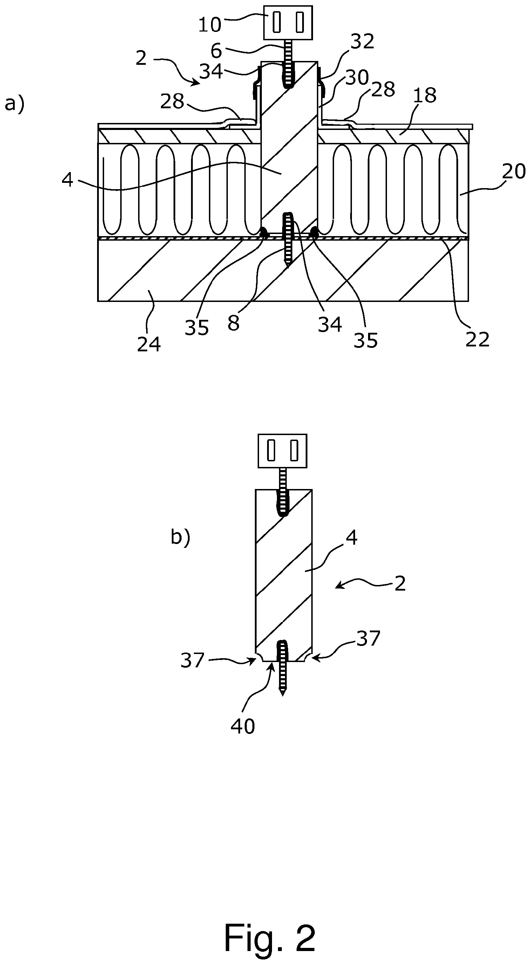

Fig. 2 illustrates a schematic cross-sectional view of the attachment member 2 mounted in bore 26 shown in Fig. 1 c). The attachment member 2 is almost identical to the attachment member 2 illustrated in Fig. 1. The only difference is, that a recess 37 configured to receive and contain a flexible sealing member 32 is provided at the periphery at the lower portion of the connection member 4.

In Fig. 2 a) it can be seen that the sealing member 32 seals the vapor barrier 22 against the connection member 4.

Fig. 2 b) illustrates a cross-sectional view of an attachment member 2. It can be seen that the recess 37 extends along the lower part of the cylindrical connection member 4 at the periphery of the lower circular contact surface 40.

It is possible to seal the vapor barrier 22 against the connection member 4 without having a recess 37. However, by providing a recess 37 that extends along the lower part of the cylindrical connection member 4, along the periphery of the lower circular contact surface 40, it is possible to provide a user-friendly attachment member 2 having a recess of a geometrical shape providing optimal sealing conditions (by having an optimum volume of sealing material).

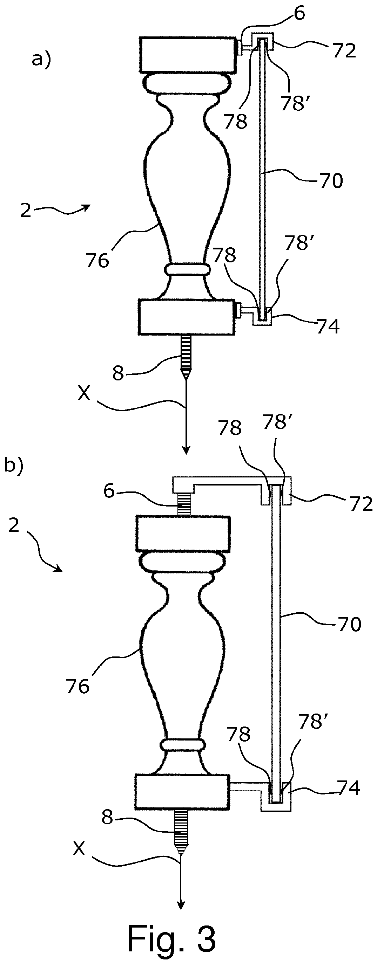

Fig. 3 a) illustrates a schematic view of an attachment member 2. The attachment member 2 has a longitudinal axis X and comprises a connection member formed as a baluster 76.

A lower attachment element 8 is provided at the bottom of the baluster 76. The baluster 76 is shaped as a tapered threaded metal rod 8 extending parallel to the longitudinal axis X of the attachment member 2. The tapered metal rod 8 is configured to be attached to an underlying construction element such as a layer of concrete or a wooden beam (rafter).

A first clamping bracket 72 is fixed to the upper portion of the baluster 76 by means of an upper plate-shaped attachment element 6.

A second clamping bracket 74 is fixed to the lower portion of the baluster 76.

A plate member (e.g. a glass plate or a photovoltaic panel) 70 is held in place by means of the first clamping bracket 72 and the second clamping bracket 74. Sealing elements 78, 78' are provided between the clamping brackets 72, 74 and the plate member 70 in order to ensure a continuous and sustained attachment of the plate member 70. The plate 70 extends parallel to the longitudinal axis X of the attachment member 2.

Fig. 3 b) illustrates a schematic view of another attachment member 2. The attachment member 2 has a longitudinal axis X and a connection member formed as a baluster 76 corresponding to the one illustrated in Fig. 3 a).

A lower attachment element 8 is provided in the bottom end of the baluster 76. The lower attachment element 8 extends parallel to the longitudinal axis X of the attachment member 2. The lower attachment element 8 is formed as a tapered threaded rod 8 that is configured to be attached to an underlying construction element such as a concrete layer or a wooden element (e.g. a rafter).

A first clamping bracket 72 is attached to the upper portion of the baluster 76 by means of an upper attachment element 6 shaped as a threaded rod (e.g. a threaded metal rod) extending parallel to the longitudinal axis of the attachment member 2.

A second clamping bracket 74 is attached to the lower portion of the baluster 76. A plate member 70 extending parallel to longitudinal axis X of the attachment member 2 is fixed by means of the first clamping bracket 72 and the second clamping bracket 74.

Sealing elements 78, 78' configured to provide a continuous and sustained attachment of the plate member 70 relative to the clamping brackets 72, 74 are provided between the clamping brackets 72, 74.

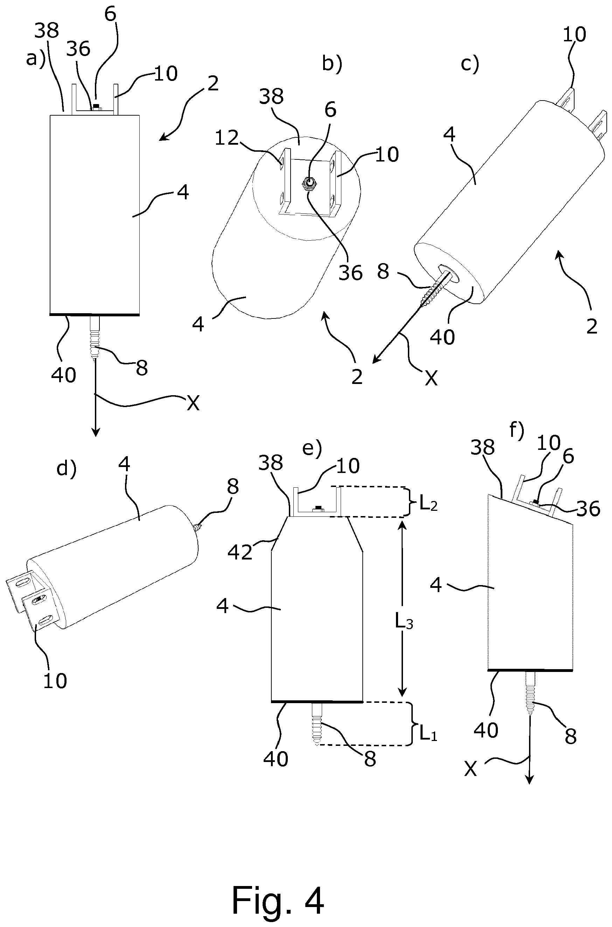

Fig. 4 illustrates various schematic illustrations of two different attachment members 2.

Fig. 4 a) shows a side view of an attachment member 2. The attachment member 2 comprises a solid cylindrical connection member 4 provided with a planar upper contact surface 38 and a planar lower contact surface 40.

A screw member 8 is attached into the solid cylindrical connection member 4 by moulding. The screw member 8 extends parallel to the longitudinal axis X of the attachment member 2.

A mount 10 is provided in the opposite end of the connection member 4. The mount is attached by means of a nut 36 and a bolt 6 to the connection member 4. The mount 10 abuts the upper contact surface 38. The bolt 6 may be moulded into the connection member 4 or be attached to the connection member 4 by mechanical means.

Fig. 4 b) illustrates a perspective top view of the attachment member 2 shown in Fig. 4 a). It can be seen from Fig. 4 b) that that the mount (or bracket) 10 is symmetrical, U-shaped and comprises a base plate abutting against the contact surface 38.

Two side walls extend in parallel and protrude from the base plate that is provided with apertures 12. These apertures 12 may be used during attachment of mounting rails for solar installation. It can be seen that the bracket 10 is attached to a centrally arranged threaded rod (a bolt) 6 by means of a nut 36 that has been tightened in such a manner that the mount 10 is brought into mechanical contact with the contact surface 38.

Fig. 4 c) shows a perspective view of the attachment member 2 illustrated in Fig. 4 a) and in Fig. 4 b).

Fig. 4 d) shows another perspective view of the attachment member 2 illustrated in Fig. 4 a), Fig. 4 b) and Fig. 4 c).

Fig. 4 e) illustrates a side view of an attachment member 2. The attachment member 2 comprises a cylindrical connection member 4 having a planar upper contact surface 38 and a planar lower contact surface 40. The connection member 4 comprises a conical surface 42 provided in the upper portion of the connection member 4. The attachment member 2 comprises a mount 10 that is attached to the connection member 4 in the same way as the attachment member 2 shown in and explained with reference to Fig. 4 a), Fig. 4 b), Fig. 4 c) and Fig. 4 d).

It can be seen that the length L₃ of the connection member 4 is significantly larger than both the length L₁ of the attachment element 8 and the total length L₂ of the mount 10 and that portion of the threaded rod 8 that extends beyond the connection member 4.

Fig. 4 e) illustrates a side view of another attachment member 2. The attachment member 2 comprises connection member 4 having an upper planar contact surface 38 and a lower planar contact surface 40. The upper contact surface 38 is angled (about 70 degrees) relative to the longitudinal axis X of the connection member 4, whereas the lower contact surface 40 extends perpendicular to the longitudinal axis X of the connection member 4.

A lower attachment element shaped as a screw 8 is attached to the lower portion of the cylindrical connection member 4 by means of moulding. A mount 10 is attached to the upper contact surface 38. The mount 10 is configured to installation of mounting rails or other objects that are intended to be attached in such a manner that they are angled relative to the underlying construction element. This is in particular an advantage when mounting solar panels on a flat roof.

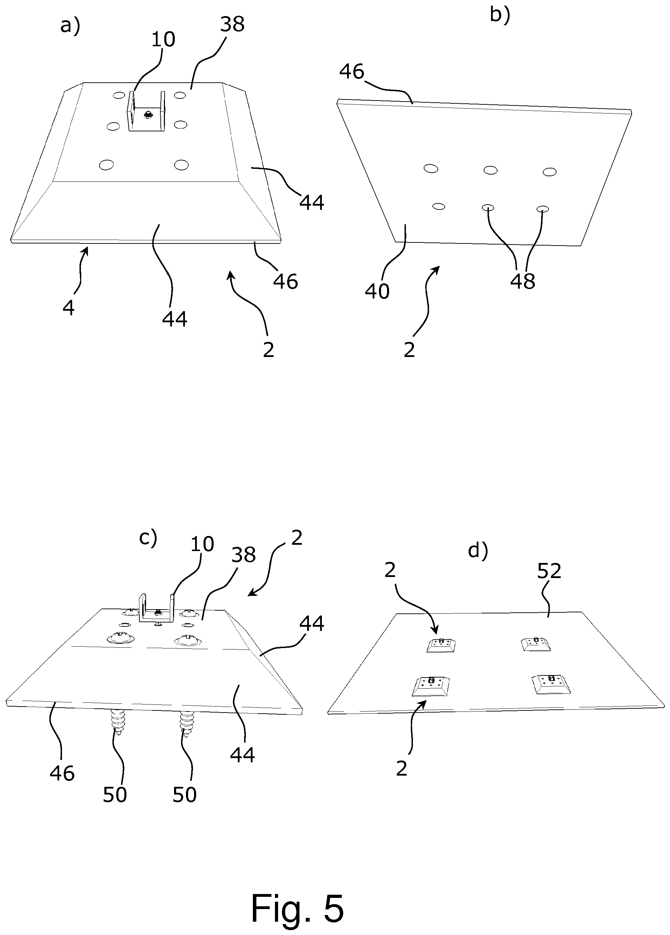

Fig. 5 illustrates another attachment member 2. Fig. 5 a) illustrates a perspective top view of an attachment member 2 according to the invention. The attachment member 2 comprises connection member 4 formed as a massive block having a centrally and symmetrically provided upper contact surface 38 surrounded by four inclined sides 44. Each of the inclined sides 44 extends between an edge 46 that extends perpendicular to a lower square contact surface 40 (see Fig. 5b).

Six through-going bores 48 are provided in the massive block 4. The bores 48 extend perpendicular to both the upper contact surface 38 and the lower contact surface 40. The bores 48 are configured to receive screws 50 for attaching the block 4 to an underlying construction (e.g. a non-isolated roof). A mount (bracket) 10 for attachment of mounting rails for solar panels are provided in the block. The mount 10 is attached to the upper portion of the block 4.

Fig. 5 c) illustrates a perspective top view of the attachment member 2 shown in Fig. 5 a) and Fig. 5 b). Four screws 50 are provided in the four corner bores of the attachment member 2. These screws 50 are configured to attach the attachment member 2 to an underlying roof 52 (e.g. a non-isolated roof covered with roofing felt).

A centrally arranged mount (bracket) 10 is attached to the central region of the block 4. The mount 10 is attached by means of a threaded rod that is attached to the block e.g. by a moulding process. It can be seen that the mount 10 is slightly raised above the upper contact surface 38 of the block.

Fig. 5 d) illustrates a perspective view of four attachment members 2 mounted on a roof 52 in a square configuration in such a manner that the mounts 10 can be used to mount solar panels (not shown).

The attachment members 2 shown in Fig. 5 provide a firm and stable attachment to the underlying roof 52. On flat (extending parallel to horizontal) roofs these attachment members 2 can be used. The mounts 10 may be provided in different levels (vertical positions) in order to angle e.g. a solar panel relative to horizontal. This is an advantage in order to increase the power produced by the solar panel. Thus, the need for a rack or mounting frame can be eliminated.

The four inclined sides 44 are provided in order to attach and seal the roofing felt on the top portion and side portions of the block 4, when the block has been mounted on an underlying construction element.

It may be an advantage to countersink the bores and cover them with a cover member such as bungs sealingly attached to the bores.

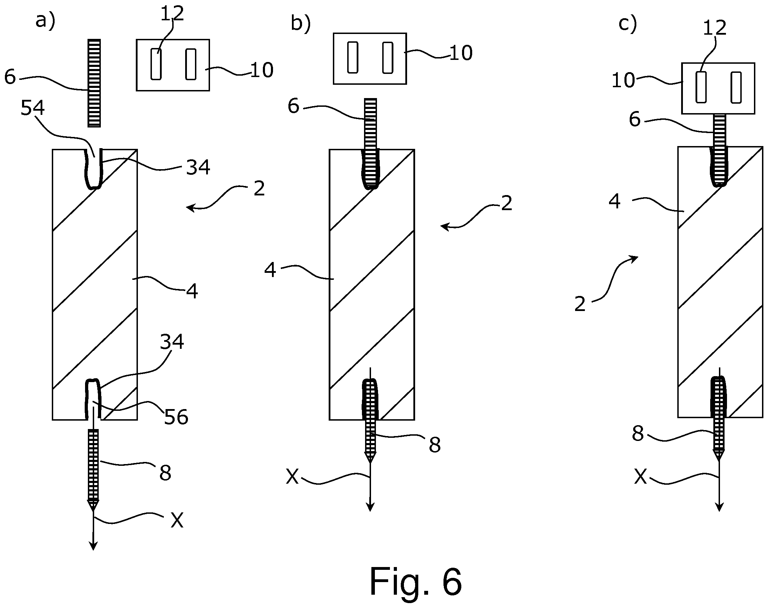

Fig. 6 illustrates cross-sectional views of three different steps during installation of an attachment member 2 according to the invention. An exploded view of a disassembled attachment member 2 is shown in Fig. 6 a). The attachment member 2 comprises a massive cylindrical connection member 4. A first bore 54 and a second bore 56 are provided in the attachment member 2. The first bore 54 and the second bore 56 extend parallel to the longitudinal axis X of the connection member 4.

An adhesive 34 is provided in the first bore 54 and in the second bore 56. The adhesive 34 is configures to fix a lower attachment element 8 and an upper attachment element 6 to the connection member 4.

A mount 10 provided with apertures 12 is arranged next to the upper attachment element 6.

Fig. 6 b) illustrates a cross-sectional view of the attachment member 2 shown in Fig. 6 a). The lower attachment element 8 and the upper attachment element 6 are fixed in the bores 54, 56.

Fig. 6 c) illustrates the attachment member 2 shown in Fig. 6 a) and in Fig. 6b). A mount 10 provided with apertures 12 is attached to the upper attachment element 6. Now, the illustrated attachment member 2 is now ready for being used for installation of items (e.g. solar panels) on a roof (e.g. a roof like the one shown in Fig. 1).

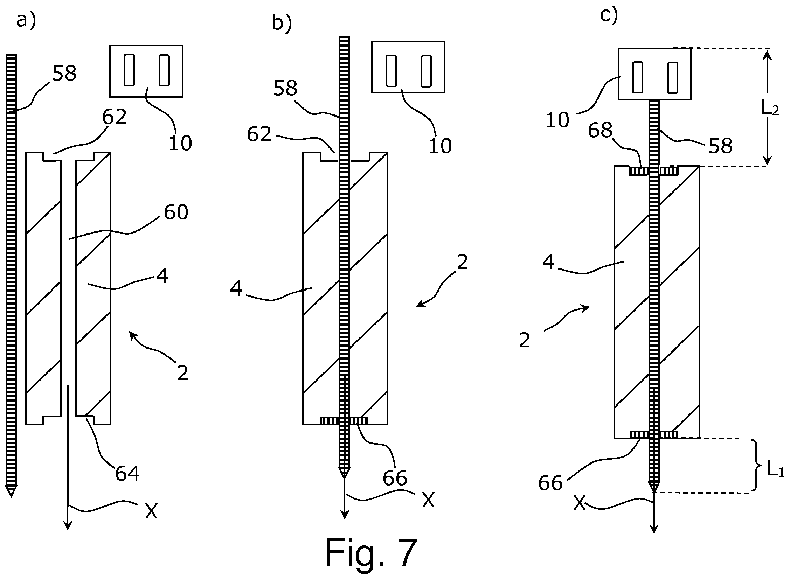

Fig. 7 illustrates cross-sectional views of three different steps during the construction of attachment member 2 according to the invention.

Fig. 7 a) illustrates attachment member 2 in a disassembled state. The attachment member 2 comprises a solid cylindrical connection element 4 provided with a through-going bore 60 extending parallel to the longitudinal axis X of the connection member 4. An upper recess 62 and lower recess 64 are provided in the connection member 4. A threaded rod 58 provided with a tapered distal end is arranged next to the connection member 4.

A mount (bracket) 10 is provided slightly above and next to the upper portion of the connection member 4. The mount 10 is configured to be attached to the threaded rod 58.

In Fig. 7 b) a flat nut 66 is provided in the lower recess. The nut 66 is screwed onto the threaded rod 58 that has been inserted into the through-going bore.

A second flat nut 68 has been mounted (screwed onto) the threaded rod 58 in Fig. 7 c). The second flat nut 68 is arranged within the upper recess and the threaded rod 58 extends through the two nuts 66, 68 and the through-going bore. The mount (bracket) 10 has been secured to the threaded rod 58. Accordingly, the attachment member 2 is ready for use. By rotating the threaded rod 58 the distance L₂ from the connection member 4 to the mount 10 and/or the distance L₁ from the connection member 4 to the pointed end of the threaded rod 58 may be adjusted. This is an advantage.

As an alternative to one threaded rod 58 it is possible to apply two through-going threaded rods being mechanically attached to the connection member 4. Hereby it is possible to adjust the distance L₂ between the connection member 4 and the mount 10 and the distance L₁ from the connection member 4 to the pointed end of the threaded rod 58 independently.

As an alternative to a threaded rod 58, the attachment member 2 may comprise a socket or brushing having an inner thread configured to receive a threaded rod 58.

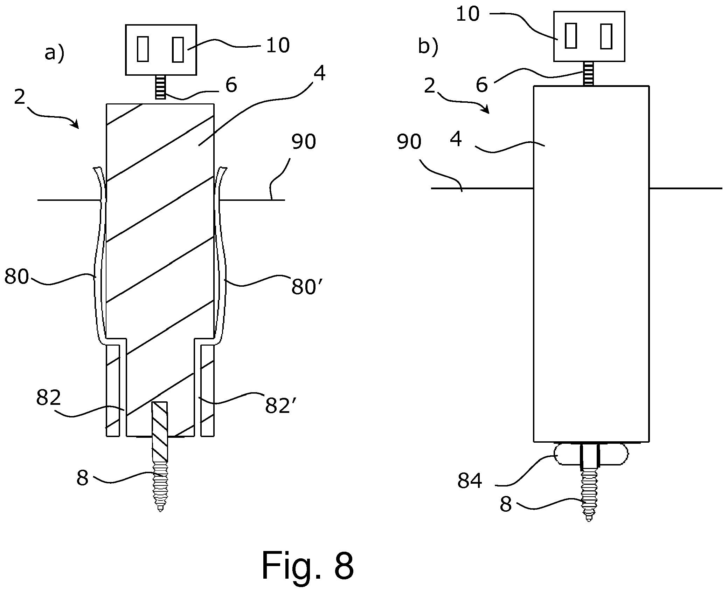

Fig. 8 a) illustrates a schematic cross-sectional view of how the connection member 4 may be sealed against the underlying support (e.g. a not shown vapor barrier). The attachment member 2 comprises a cylindrical connection member 4.

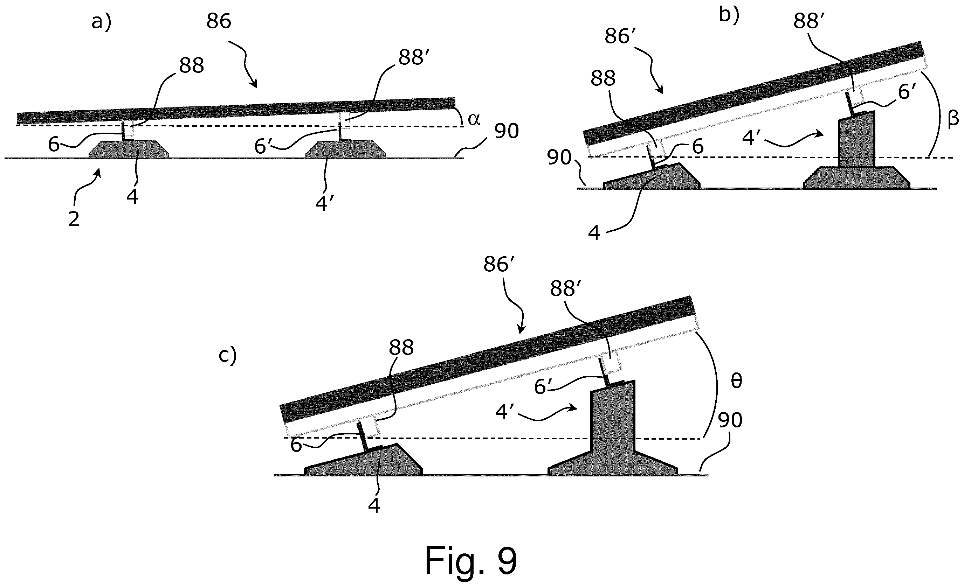

The attachment member 2 is provided with an upper attachment element 6 formed as a threaded rod 6, onto which a mount 10 for mounting a mounting frame (see Fig. 9) is mounted. The attachment member 2 is adapted to be screwed into an underlying construction element by means of a lower attachment element 8 formed as a screw 8.

The attachment member 2 extends through an insulation material arranged below a support 90 (e.g. roofing felt). The connection member 4 is sealed up against the underlying vapour barrier (not shown) by blowing a sealing material through a plurality of pipes (e.g. rubber or silicone) 80, 80'. The pipes 80, 80' are mounted in through-going bores 82, 82' provided in the lower portion of the connection member 4.

The sealing material will flow into the gap between the connection member 4 and the vapour barrier when the sealing material is blown through the pipes 80, 80' and further through the bores 82, 82'. Hereby the connection member 4 is sealed against the vapour barrier. The bores 82, 82' are sealed against the surroundings by filling the bores 82, 82' up with sealing material.

Fig. 8 b) illustrates a schematic view of an attachment member 2, comprising a cylindrical connection element 4. The connection element 4 is provided with an upper attachment element 6 shaped as a threaded rod 6. A mount 10 for mounting a mounting frame of the type illustrated in Fig. 9 is attached to the attachment element 6.

The attachment member 2 is configured to be screwed into an underlying construction element by means of a lower attachment element 8 shaped as a screw 8.

A bag 84 surrounds a portion of the screw 8. The bag 84 contains a sealing material. The sealing material will flow out of the bag 84 and be evenly distributed to the area between the connection element 4 and the underlying vapour barrier when the attachment member 2 is screwed into the underlying construction element (not shown) by means of a lower attachment element 8 shaped as a screw 8. Hereby an appropriate sealing can be provided between the connection element 4 and the underlying vapour barrier.

It is possible to arrange a (small) moisture sensor (not shown) into the lower part of the connection member 4 in order to be informed in case of water regress. The sensor may be provided with a battery having a capacity to provide adequate service life of the sensor. Fig. 9 shows schematic views of different ways in which solar panels 86 can be mounted on a flat roof.

Fig. 9 schematically illustrates different ways of mounting solar panels 86 on a flat roof. Fig. 9 a) illustrates a solar panel 86 mounted on a first mounting frame 88 and a second mounting frame 88'. The mounting frames 88, 88' are fixed respectively to a first attachment element 6 and a second attachment element 6'. The first attachment element 6 and a second attachment element 6' are mounted respectively on a first connection member 4 and a second connection member 4'. The second mounting frame 88' is positioned in a slightly higher level on the second attachment element 6' than the first mounting frame 88. Accordingly, the solar panel 86 extends in an angle α relative to the support 90 (e.g. roofing felt).

Fig. 9 b) illustrates a solar panel 86' mounted on a first mounting frame 88 and a second mounting frame 88'. The mounting frames 88, 88' are fixed to a first attachment element 6 and a second attachment element 6', respectively.

The first attachment member 6 is mounted on a first connection member 4, while the second attachment element 6' is secured to a second connection member 4'. The second connection member 4' has a different geometric shape and height than the first connection member 4. It can be seen that by using different connection members 4, 4' (having different heights) the solar panel 86' extends along a plane provided in an angle β relative to the support 90.

Fig. 9 c) illustrates a solar panel 86' mounted on a first mounting frame 88 and a second mounting frame 88', respectively. The mounting frames 88, 88' are mounted on a first attachment element 6 and a second attachment element 6'. The first attachment element 6 is mounted on a first connection member 4, while the second attachment element 6' is secured to a second connection member 4' being higher and having a different geometric shape than the first connection member 4. Thus the solar panel 86' extends along a plane provided in an angle θ relative to the support 90. The connection members 4, 4' may be attached to the support 90 by gluing or by use of mechanical means.

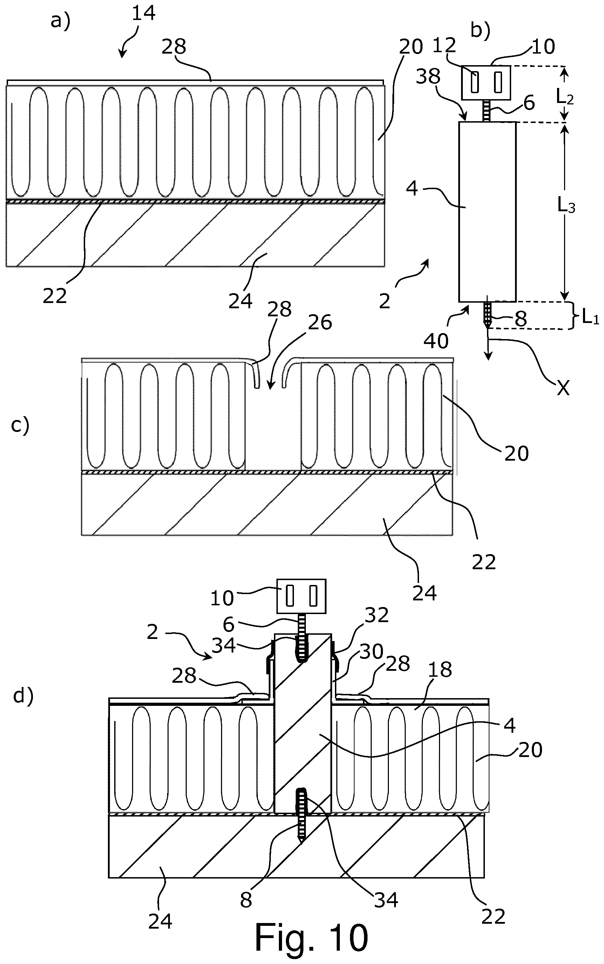

Fig. 10 schematically shows illustrations similar to the one shown in Fig. 1. The attachment member 2, however, is attached to an underlying construction element 24 in an insulated roof. The roofing felt 28 is mounted on top of the insulation 20 without any layer in between. The remaining elements are explained with reference to Fig. 1. It can be seen that the isolated roof comprises an upper roofing felt layer 28 placed on top of the insulation 20.

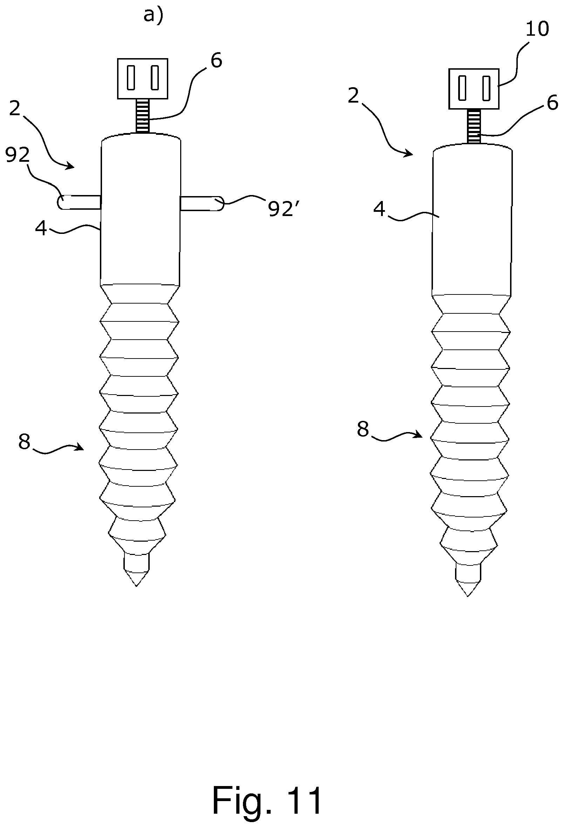

Fig. 11 illustrates attachment members 2 configured to be attached directly into a support or the substrate such as soil, sand, clay or the like. The attachment members 2 are configured to be mounted in outside directly into the soil.

The attachment member 2 shown in Fig. 11 a) comprises an elongated cylindrical connecting member 4 and a lower screw member 8.

The connection element 4 and a lower screw member 8 are integrated into the one and same element made in a material that can withstand the cold, vibrations and temperature stresses that one would expect when the attachment member 2 is installed outside in the ground.

It may be advantageous to manufacture the attachment member 2 in a plastic material (e.g. recycled plastics). An upper attachment element 6 in the form of a threaded rod 6 is provided in the upper part of the connection member 4.

A mount 10 is attached to the top of the connecting element 4.

Two radially extending handles 92, 92' are provided in the upper portion of the connection member 4. These handles 92, 92' may be used when rotating the attachment member into the support (e.g. sand or soil). It may be advantageous to mount the attachment member 2 in a predrilled hole in the ground.

Fig. 11 b) illustrates an attachment member 2 almost similar to the one shown in Fig. 11 a). The only difference is that the attachment member 2 shown in Fig. 11 b) contains no handles.

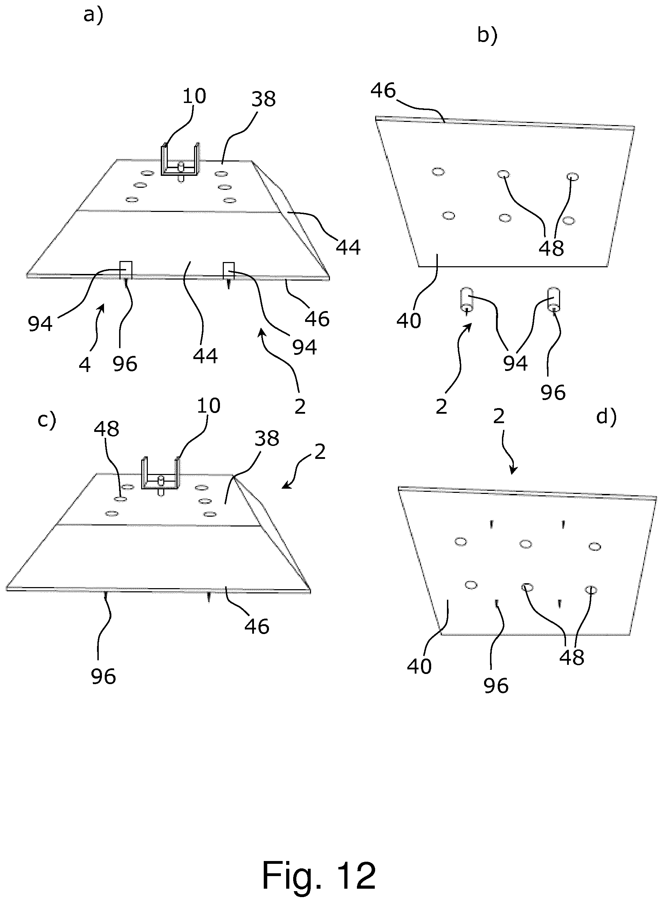

Fig. 12 shows alternative attachment members 2 having the same outer geometry as the one shown in Fig. 5.

Fig. 12 a) illustrates a perspective top view of the attachment member 2 that comprises a connection member 4, a bracket 10 provided with an upper contact surface 38, four edges 46 and four inclined sides 44. The spikes 96 of two bung members 94 are shown.

Fig. 12 b) illustrates s perspective bottom view of the attachment member 2 in which two bung members 94 each provided with a spike 96 are arranged below the attachment member 2. These bung members 94 are configured to be inserted into the bores 48.

Fig. 12 d) illustrates a perspective bottom view of an attachment member 2 in which four spikes 96 protrudes from the lower contact surface 40 of the attachment members 2.

Fig. 12 c) shows a perspective top view of the attachment member 2 shown in Fig. 12 d).

The attachment member 2 shown in Fig. 12 comprise a bracket 10 provided with the upper contact surface 38, four edges 46 and four inclined sides 44. Moreover, the attachment members 2 are provided with six bores 48. The bung members 94 may be conical in order to achieve an easy way of attaching them to the connection member 4. The attachment member 2 may be glued to a roof. The spikes will prevent the attachment member 2 from skidding.

### List of reference numerals

- 2: Attachment member
- 4, 4': Connection member
- 6, 6': Upper attachment element
- 8: Lower attachment element
- 10: Mount
- 12: Aperture
- 14: Roof
- 16: Roofing felt
- 18: Underlying member (e.g. a plywood plate or boards)
- 20: Insulation
- 22: Vapour barrier
- 24: Construction element (e.g. a rafter)
- 26: Bore
- 28: Roofing felt
- 30: Collar
- 32: Sealing member
- 34: Adhesive (e.g. an anchoring material)
- 35: Sealing member
- 36: Nut
- 38: Upper contact surface
- 40: Lower contact surface
- 42: Conical surface
- 44: Inclined side
- 46: Edge
- 48: Bore
- 50: Screw
- 52: Roof
- 54, 56: Bore
- 58: Through-going rod member/threaded rod
- 60: Through-going bore
- 62, 64: Recess
- 66, 68: Nut
- 70: Plate member
- 72: Clamping bracket
- 74: Clamping bracket
- 76: Baluster
- 78: Sealing element
- X: Longitudinal axis
- L₁, L₂, L₃: Length/distance
- 80: Pipe member or hose member
- 82, 82': Through-going bore
- 84: Bag
- 86, 86': Solar panel
- 88, 88': Mounting frame
- 90: Support
- α, β, θ: Angle
- 92, 92': Handle
- 94: Bung member
- 96: Spike

## Claims

1. An attachment member (2) for attaching mounting rails for solar panels (86) to an underlying construction element (24) such as a rafter or a concrete deck, comprising:
a) a massive or semi-massive connection member (4) having a longitudinal axis (X), and an upper end and a lower end; and
b) a mount (10) or a bracket (10) attached to the upper portion of the connecting member (4) and configured for mounting mounting rails for attachment of solar panels, or a unit (6) for attachment of a mount (10) or a bracket (10) for mounting mounting rails for attachment of solar panels, the unit (6) being attached to the upper portion of the connecting member (4);
and the attachment member (2) further comprising:
c) at least one lower attachment element (8) configured to be mounted in the underlying construction element (24) and attached to the connection member (4)
where the connection member (4) is configured to transfer load from the mount (10), the bracket (10) or the unit (6) to the at least one lower attachment element (8), where the connection member (4) comprises a lower connection surface (40) extending basically perpendicular to the longitudinal axis (X) of the connection member (4), where the lower connection surface (40) is configured to bear against the underlying construction element (24) and hereby provide a stabilising lower connection surface (40) when the attachment member (2) is mounted to the underlying construction element (24), where the at least one lower attachment element (8) protrudes from the lower connection surface (40) and extends along the longitudinal axis (X) of the connection member (4), **characterised in that** the connection member (4) comprises a plurality of spikes (96) protruding from the lower contact surface (40).

2. An attachment member (2) according to claim 1, **characterised in that** a flexible glue or sealing is provided under the lower contact surface (40) for gluing the attachment member (2) to e.g. a roof (24).

3. An attachment member (2) according to claim 1 or 2, **characterised in that** the attachment element (8) is a tapered metal rod and is attached to the connection member (4) by means of an adhesive (34).

4. An attachment member (2) according to claim 3, **characterised in that** the adhesive (34) is an anchoring material.

5. An attachment member (2) according to any one of the preceding claims, **characterised in that** the connection member (4) comprises an upper planar connection surface (38) extending basically perpendicular to the longitudinal axis (X) of the connection member (4).

6. An attachment member (2) according to claim 5, **characterised in that** the upper planar contact surface (38) is angled between 45 and 90 degrees relative to the longitudinal axis (X) of the connection member (4).

7. An attachment member (2) according to one of the preceding claims, **characterised in that** the connection member (4) comprises a cylindrical portion (4) and comprises a planar circular upper contact surface (38) and a planar lower contact surface (40).

8. An attachment member (2) according to one of the preceding claims, **characterised in that** the connection member (4) comprises a rectangular, preferably square cross section and comprises a planar and rectangular, preferably square upper contact surface (38) and a planar rectangular, preferably square lower contact surface (40) extending basically parallel to the upper contact surface (38), where a plurality of bores (48) are provided in the connection member (4), through which bores (48) the attachment member (2) is configured to be attached to the underlying construction element (24, 52).

9. An attachment member (2) according to claim 8, **characterised in that** the bores (48) are through-going bores (48).

10. An attachment member (2) according to any one or the preceding claims claims, **characterised in that** a centrally arranged mount (10) or bracket (10) is attached to connection member (4), where the mount (10) or bracket (10) is attached to a threaded rod (58), which threaded rod (58) is moulded or mechanically attached to the connection member (4).

11. An attachment member (2) according to any one of preceding claims, **characterised in that** a first bore (54) is provided in the upper portion of the connection member (4) and a lower bore (56) is provided in the connection member (4), where the two bores (54, 56) extend basically parallel to the longitudinal axis (X) of the connection member (4), where an upper attachment element (6) is formed as a threaded rod (6) and is mounted in the first bore (54), where the lower attachment element (8) is formed as a threaded rod (8) and is mounted in the second bore (56).

12. An attachment member (2) according to any one of the preceding claims, **characterised in that** a through-going bore (60) is provided in the connection member (4) and that a through-going rod member (58) extends through the through-going bore (60) and is attached to the connection member (4), and **in that** the rod member (58) is a threaded rod member (58).

13. An attachment member (2) according to claim 12, **characterised in that** the attachment member (2) is configured to upon rotation of the threaded rod member (58) adjust the position of the mount (10) or bracket (10) relative to the connection member (4).

14. An attachment member (2) according to claim 12 or claim 13, **characterised in that** the attachment member (2) is configured to upon rotation of the threaded rod member (58) adjust the distance from the connection member (4) to the distal end of the lower attachment element (8) being shaped as a threaded rod member (58).

15. An attachment member (2) according to any one of the preceding claims, **characterised in that** the connection member (4) is provided with a plurality of bores (48) and a plurality of bung members (94) attachably inserted into the bores (48), where the bung members (94) comprises a spike (96) protruding from the bung members (94).

## Patentansprüche

1. Befestigungskomponente (2) zum Befestigen von Montageschienen für Solarpaneele (86) an einem unterliegenden Konstruktionselement (24), wie etwa ein Sparren oder ein Betondeck, die Folgendes umfasst:
a) eine massive oder halbmassive Verbindungskomponente (4) mit einer Längsachse (X) und einem oberen Ende und einem unteren Ende und
b) einen Halter (10) oder eine Halterung (10), der bzw. die am oberen Abschnitt der Verbindungskomponente (4) befestigt und zum Montieren von Montageschienen zum Befestigen von Solarpaneelen ausgelegt ist, oder eine Einheit (6) zum Befestigen eines Halters (10) oder einer Halterung (10) zum Montieren von Montageschienen zur Befestigung von Solarpaneelen, wobei die Einheit (6) am oberen Abschnitt der Verbindungskomponente (4) befestigt ist;
und die Befestigungskomponente (2) ferner Folgendes umfasst:
c) mindestens ein unteres Befestigungselement (8), das dazu ausgelegt ist, am unterliegenden Konstruktionselement (24) montiert und an der Verbindungskomponente (4) befestigt zu werden,
wobei die Verbindungskomponente (4) dazu ausgelegt ist, eine Last vom Halter (10), von der Halterung (10) oder von der Einheit (6) auf das mindestens eine untere Befestigungselement (8) zu übertragen, wobei die Verbindungskomponente (4) eine untere Verbindungsfläche (40) umfasst, die sich grundsätzlich senkrecht zur Längsachse (X) der Verbindungskomponente (4) erstreckt, wobei die untere Verbindungsfläche (40) dazu ausgelegt ist, am unterliegenden Konstruktionselement (24) anzuliegen und hierdurch eine stabilisierende untere Verbindungsfläche (40) bereitzustellen, wenn die Befestigungskomponente (2) am unterliegenden Konstruktionselement (24) montiert ist, wobei das mindestens eine untere Befestigungselement (8) von der unteren Verbindungsfläche (40) vorsteht und sich entlang der Längsachse (X) der Verbindungskomponente (4) erstreckt, **dadurch gekennzeichnet, dass** die Verbindungskomponente (4) eine Vielzahl von Dornen (96) umfasst, die von der unteren Kontaktfläche (40) vorstehen.

2. Befestigungskomponente (2) nach Anspruch 1, **dadurch gekennzeichnet, dass** ein flexibler Kleber oder eine flexible Dichtung unter der unteren Kontaktfläche (40) zum Kleben der Befestigungskomponente (2) z. B. an ein Dach (24) bereitgestellt ist.

3. Befestigungskomponente (2) nach Anspruch 1 oder 2, **dadurch gekennzeichnet, dass** das Befestigungselement (8) eine konische Metallstange ist und mittels eines Klebstoffs (34) an der Verbindungskomponente (4) befestigt ist.

4. Befestigungskomponente (2) nach Anspruch 3, **dadurch gekennzeichnet, dass** der Klebstoff (34) ein Verankerungsmaterial ist.

5. Befestigungskomponente (2) nach einem der vorhergehenden Ansprüche, **dadurch gekennzeichnet, dass** die Verbindungskomponente (4) eine obere planare Verbindungsfläche (38) umfasst, die sich grundsätzlich senkrecht zur Längsachse (X) der Verbindungskomponente (4) erstreckt.

6. Befestigungskomponente (2) nach Anspruch 5, **dadurch gekennzeichnet, dass** die obere planare Kontaktfläche (38) relativ zur Längsachse (X) der Verbindungskomponente (4) zwischen 45 und 90 Grad abgewinkelt ist.

7. Befestigungskomponente (2) nach einem der vorhergehenden Ansprüche, **dadurch gekennzeichnet, dass** die Verbindungskomponente (4) einen zylindrischen Abschnitt (4) umfasst und eine planare kreisförmige obere Kontaktfläche (38) und eine planare untere Kontaktfläche (40) umfasst.

8. Befestigungskomponente (2) nach einem der vorhergehenden Ansprüche, **dadurch gekennzeichnet, dass** die Verbindungskomponente (4) einen rechteckigen, vorzugsweise quadratischen Querschnitt umfasst und eine planare und rechteckige, vorzugsweise quadratische obere Kontaktfläche (38) und eine planare rechteckige, vorzugsweise quadratische untere Kontaktfläche (40), die sich grundsätzlich parallel zur oberen Kontaktfläche (38) erstreckt, umfasst, wobei eine Vielzahl von Bohrungen (48) in der Verbindungskomponente (4) bereitgestellt sind, wobei die Befestigungskomponente (2) dazu ausgelegt ist, durch diese Bohrungen (48) am unterliegenden Konstruktionselement (24, 52) befestigt zu werden.

9. Befestigungskomponente (2) nach Anspruch 8, **dadurch gekennzeichnet, dass** die Bohrungen (48) Durchgangsbohrungen (48) sind.

10. Befestigungskomponente (2) nach einem der vorhergehenden Ansprüche Ansprüche, **dadurch gekennzeichnet, dass** ein zentral angeordneter Halter (10) oder eine zentral angeordnete Halterung (10) an der Verbindungskomponente (4) befestigt ist, wobei der Halter (10) oder die Halterung (10) an einer Gewindestange (58) befestigt ist, wobei die Gewindestange (58) an die Verbindungskomponente (4) geformt oder mechanisch an dieser befestigt ist.

11. Befestigungskomponente (2) nach einem der vorhergehenden Ansprüche, **dadurch gekennzeichnet, dass** eine erste Bohrung (54) im oberen Abschnitt der Verbindungskomponente (4) bereitgestellt ist und eine untere Bohrung (56) in der Verbindungskomponente (4) bereitgestellt ist, wobei sich die zwei Bohrungen (54, 56) grundsätzlich parallel zur Längsachse (X) der Verbindungskomponente (4) erstrecken, wobei ein oberes Befestigungselement (6) als eine Gewindestange (6) gebildet und in der ersten Bohrung (54) montiert ist, wobei das untere Befestigungselement (8) als eine Gewindestange (8) gebildet und in der zweiten Bohrung (56) montiert ist.

12. Befestigungskomponente (2) nach einem der vorhergehenden Ansprüche, **dadurch gekennzeichnet, dass** eine Durchgangsbohrung (60) in der Verbindungskomponente (4) bereitgestellt ist und dass sich eine durchgehende Stangenkomponente (58) durch die Durchgangsbohrung (60) erstreckt und an der Verbindungskomponente (4) befestigt ist, und dadurch, dass die Stangenkomponente (58) eine Gewindestangenkomponente (58) ist.

13. Befestigungskomponente (2) nach Anspruch 12, **dadurch gekennzeichnet, dass** die Befestigungskomponente (2) dazu ausgelegt ist, nach einer Drehung der Gewindestangenkomponente (58) die Position des Halters (10) oder der Halterung (10) relativ zur Verbindungskomponente (4) anzupassen.

14. Befestigungskomponente (2) nach Anspruch 12 oder Anspruch 13, **dadurch gekennzeichnet, dass** die Befestigungskomponente (2) dazu ausgelegt ist, nach einer Drehung der Gewindestangenkomponente (58) den Abstand von der Verbindungskomponente (4) zum distalen Ende des unteren Befestigungselements (8), das als eine Gewindestangenkomponente (58) geformt ist, anzupassen.

15. Befestigungskomponente (2) nach einem der vorhergehenden Ansprüche, **dadurch gekennzeichnet, dass** die Verbindungskomponente (4) mit einer Vielzahl von Bohrungen (48) und einer Vielzahl von Zapfenkomponenten (94), die befestigbar in die Bohrungen (48) eingesetzt sind, versehen ist, wobei die Zapfenkomponenten (94) einen Dorn (96), der von den Zapfenkomponenten (94) vorsteht, umfasst.

## Revendications

1. Élément de fixation (2) destiné à la fixation de rails de montage pour panneaux solaires (86) à un élément de construction sous-jacent (24) tel qu'une poutre ou un tablier en béton, comprenant :
a) un élément de liaison (4) massif ou semi-massif présentant un axe longitudinal (X) ainsi qu'une extrémité supérieure et une extrémité inférieure, et
b) une monture (10) ou une ferrure (10) fixée à la partie supérieure de l'élément de liaison (4) et conçue pour le montage de rails de montage destinés à la fixation de panneaux solaires, ou une unité (6) destinée à la fixation d'une monture (10) ou d'une ferrure (10) destinée au montage de rails de montage destinés à la fixation de panneaux solaires, l'unité (6) étant fixée à la partie supérieure de l'élément de liaison (4) ;
l'élément de fixation (2) comprenant en outre :
c) au moins une partie de fixation inférieure (8) conçue pour être montée dans l'élément de construction sous-jacent (24) et fixée à l'élément de liaison (4),
ledit élément de liaison (4) étant conçu pour transférer la charge, de la monture (10), de la ferrure (10) ou de l'unité (6) à l'au moins une partie de fixation inférieure (8), ledit élément de liaison (4) comprenant une surface de liaison inférieure (40) sensiblement perpendiculaire à l'axe longitudinal (X) de l'élément de liaison (4), ladite surface de liaison inférieure (40) étant conçue pour être en appui contre l'élément de construction sous-jacent (24) et ainsi fournir une surface de liaison inférieure (40) de stabilisation lorsque l'élément de fixation (2) est monté sur l'élément de construction sous-jacent (24), ladite au moins une partie de fixation inférieure (8) faisant saillie à partir de la surface de liaison inférieure (40) et longeant l'axe longitudinal (X) de l'élément de liaison (4) ; **caractérisé en ce que** l'élément de liaison (4) comprend une pluralité de picots (96) faisant saillie à partir de la surface de contact inférieure (40).

2. Élément de fixation (2) selon la revendication 1, **caractérisé en ce qu'**une colle ou un étanchéifiant flexible est prévu sous la surface de contact inférieure (40) pour coller l'élément de fixation (2), par exemple à une toiture (24).

3. Élément de fixation (2) selon la revendication 1 ou 2, **caractérisé en ce que** la partie de fixation (8) consiste en une tige métallique effilée et est fixée à l'élément de liaison (4) au moyen d'un adhésif (34).

4. Élément de fixation (2) selon la revendication 3, **caractérisé en ce que** l'adhésif (34) est un matériau d'ancrage.

5. Élément de fixation (2) selon l'une quelconque des revendications précédentes, **caractérisé en ce que** l'élément de liaison (4) comprend une surface de liaison supérieure (38) plane sensiblement perpendiculaire à l'axe longitudinal (X) de l'élément de liaison (4).

6. Élément de fixation (2) selon la revendication 5, **caractérisé en ce que** la surface de contact supérieure (38) plane est inclinée entre 45 et 90 degrés par rapport à l'axe longitudinal (X) de l'élément de liaison (4).

7. Élément de fixation (2) selon l'une des revendications précédentes, **caractérisé en ce que** l'élément de liaison (4) comprend une partie cylindrique (4) et comprend une surface de contact supérieure (38) plane circulaire et une surface de contact inférieure (40) plane.

8. Élément de fixation (2) selon l'une des revendications précédentes, **caractérisé en ce que** l'élément de liaison (4) présente une section transversale rectangulaire, de préférence carrée, et comprend une surface de contact supérieure (38) plane et rectangulaire, de préférence carrée, et une surface de contact inférieure (40) plane rectangulaire, de préférence carrée, sensiblement parallèle à la surface de contact supérieure (38) ; une pluralité d'alésages (48) étant prévus dans l'élément de liaison (4), lesquels alésages (48) permettent à l'élément de fixation (2) d'être fixé à l'élément de construction sous-jacent (24, 52).

9. Élément de fixation (2) selon la revendication 8, **caractérisé en ce que** les alésages (48) sont des alésages traversants (48).

10. Élément de fixation (2) selon l'une quelconque des revendications précédentes, **caractérisé en ce qu'**une monture (10) ou ferrure (10) disposée centrée est fixée à l'élément de liaison (4), ladite monture (10) ou ferrure (10) étant fixée à une tige filetée (58), laquelle tige filetée (58) est moulée ou fixée mécaniquement à l'élément de liaison (4).

11. Élément de fixation (2) selon l'une quelconque des revendications précédentes, **caractérisé en ce qu'**un premier alésage (54) est prévu dans la partie supérieure de l'élément de liaison (4) et un alésage inférieur (56) est prévu dans l'élément de liaison (4), lesdits deux alésages (54, 56) s'étendant sensiblement parallèlement à l'axe longitudinal (X) de l'élément de liaison (4), une partie de fixation supérieure (6) étant constituée sous la forme d'une tige filetée (6) et étant montée dans le premier alésage (54), ladite partie de fixation inférieure (8) ayant la forme d'une tige filetée (8) et étant montée dans le deuxième alésage (56).

12. Élément de fixation (2) selon l'une quelconque des revendications précédentes, **caractérisé en ce qu'**un alésage traversant (60) est prévu dans l'élément de liaison (4) et qu'un élément de tige traversant (58) traverse l'alésage traversant (60) et est fixé à l'élément de liaison (4), et **en ce que** l'élément de tige (58) est un élément de tige fileté (58).

13. Élément de fixation (2) selon la revendication 12, **caractérisé en ce que** l'élément de fixation (2) est conçu pour ajuster, du fait de la rotation de l'élément de tige fileté (58), la position de la monture (10) ou de la ferrure (10) par rapport à l'élément de liaison (4).

14. Élément de fixation (2) selon la revendication 12 ou 13, **caractérisé en ce que** l'élément de fixation (2) est conçu pour ajuster, du fait de la rotation de l'élément de tige fileté (58), la distance entre l'élément de liaison (4) et l'extrémité distale de la partie de fixation inférieure (8) ayant la forme d'un élément de tige fileté (58).

15. Élément de fixation (2) selon l'une quelconque des revendications précédentes, **caractérisé en ce que** l'élément de liaison (4) est pourvu d'une pluralité d'alésages (48) et d'une pluralité d'éléments formant bondes (94) introduits à demeure dans les alésages (48), lesdits éléments formant bondes (94) comprenant un picot (96) faisant saillie à partir desdits éléments formant bondes (94).
